# EUROPEAN PATENT APPLICATION

(11) **EP 4 216 134 A1**
(43) Date of publication of application: **26.07.2023**
(21) Application number: 21869201.0
(22) Date of filing: 03.09.2021
(51) Int. Cl.: G06Q 30/02, G06Q 30/06, G06Q 50/02

(54) **PRODUCE SALES SYSTEM AND PLOT SELECTION RECEPTION METHOD**

(30) Priority: 16.09.2020 JP 2020155684
(71) Applicant: Kimoto Co., Ltd., Saitama 338-0013 (JP)
(72) Inventor: ANDO, Motoko, Saitama-shi, Saitama 338-0013 (JP); KIRITANI, Erina, Saitama-shi, Saitama 338-0013 (JP); TANAKA, Sayumi, Saitama-shi, Saitama 338-0013 (JP); TSUKANO, Misako, Saitama-shi, Saitama 338-0013 (JP)
(74) Representative: Dennemeyer & Associates S.A.
(86) International application number: PCT/JP2021/032400
(87) International publication number: WO 2022/059514

(57) **Abstract**

To make it possible to intuitively grasp geographical climate or environment in a field at the time of purchasing. On a plot selection screen including a plot selection image 502 for a selected field, selection of a plot from which rice produced therein is purchased is received. The plot selection image 502 for the field is one including, on an area environment presenting image 5021 for the field, a line indicating the boundary of each plot in the field and the name (a number in the figure) of each plot. The area environment presenting image 5021 is obtained in such a manner that an image, which includes the field, in a predetermined shape is extracted as a presented image from an aerial photograph and the scale of the presented image is changed such that the size of the extracted presented image reaches a certain size. Assuming that the type of feature indicating the characteristics of geographical climate or environment in the field is a predetermined type, the presented image is extracted from the aerial photograph such that the field and the predetermined type of feature are recognizable on the area environment presenting image 5021.

## Description

### TECHNICAL FIELD

The present invention relates to a technique of selling produce over the Internet.

### BACKGROUND ART

As a technique of selling produce over the Internet, a technique of displaying, on a terminal device of a customer, a plot map indicating divided plots of a field selected by the customer and receiving selection of a plot, where produce which is intended to be purchased is produced, on the plot map has been known (e.g., Patent Literature 1).

### CITATION LIST

### PATENT LITERATURE

Patent Literature 1: Japanese Patent No. 6721492

### SUMMARY OF INVENTION

### PROBLEMS TO BE SOLVED BY INVENTION

If geographical climate or environment in a field or a plot where produce to be purchased is produced can be known, such information is of reference to a customer in determination on whether or not the customer will purchase the produce and selection of the field or the plot from which the produce is purchased.

However, by the above-described technique, the customer cannot promptly grasp the geographical climate or environment in the field or the plot.

For this reason, the present invention is intended to make it possible for a customer to intuitively grasp geographical climate or environment in a field or a plot, where produce which is intended to be purchased is produced, by use of a sales system that receives selection of the field or the plot from the customer and sells the produce.

### SOLUTION TO PROBLEMS

In order to solve the above-described problems, the present invention relates to a produce sales system for receiving selection of a plot in a field, where produce which is intended to be purchased is produced, via a network to sell the produce produced in the selected plot or to pre-sell the produce scheduled to be produced in the selected plot, the produce sales system including: a plot selection screen provider that causes a client device connected to the produce sales system via the network to display a plot selection screen corresponding to the field; and a plot selection receiver that receives, on the plot selection screen, the selection of the plot in the field where the produce which is intended to be purchased is produced from a user of the client device. Note that the plot selection screen includes a field image which is an image including an environment presenting image which is any of an aerial photograph, a two-dimensional map, and a three-dimensional map indicating conditions of the field and at least part of a predetermined type of feature outside the field. The predetermined type is the type of feature indicating the characteristics of geographical climate or environment.

The produce sales system may further include: a field selection screen provider that causes the client device to display a field selection screen including a field guide map that multiple field positions are displayed on a map; and a field selection receiver that receives, on the field guide map on the field selection screen, selection of the field from the user of the client device. The plot selection screen provider may cause the client device to display the plot selection screen corresponding to the selected field received by the field selection receiver.

In this case, the field selection screen and the plot selection screen including multiple plot selection screens each corresponding to multiple fields may form different portions of one Web page.

Further, in the produce sales system configured such that the plot selection screen corresponding to the selected field received by the field selection receiver is displayed, the environment presenting images included in the field images on the plot selection screens each corresponding to the multiple fields may be images having an identical size and set on such scales that the conditions of the corresponding fields and the predetermined type of feature are displayed on the environment presenting images, the scales being not unified among the plot selection screens.

The above-described produce sales system may be configured such that the field image includes a figure indicating the plot in the field on the environment presenting image and the plot selection receiver receives the selection of the plot on the field image.

The above-described produce sales system is preferably configured such that the environment presenting image indicates the conditions of the field and the predetermined type of feature.

Further, the environment presenting image may be produced in such a manner that a range satisfying a predetermined condition is extracted as a presented portion from any of the aerial photograph, the two-dimensional map, and the three-dimensional map indicating the feature in the range including the field and the scale of the presented portion is changed such that the size of the extracted presented portion reaches a predetermined size. In this case, the predetermined condition for the range is that the range includes the field and the predetermined type of feature and the percentage of the size of the field included in the presented portion with respect to the size of the presented portion is a predetermined percentage or greater.

The predetermined type preferably includes any one of a "mountain," a "river," a "water channel," a "lake," a "sea," a "forest," "other fields," a "residential area," a "dam," or an "embankment." Note that the "water channel" includes a "canal," a "moat," and a "waterway,", and the "lake" is a stationary water area surrounded by lands and not directly connected to seas and includes a "lake," a "pond," and a "swamp." The lake is a stationary water area surrounded by lands and not directly connected to seas, and includes a lake, a pond, and a swamp.

According to the above-described produce sales system, the field image which is the image including the environment presenting image which is any of the aerial photograph, the two-dimensional map, and the three-dimensional map indicating the conditions of the field and the feature near the field is displayed on the plot selection screen for receiving the selection of the plot in the field where the produce which is intended to be purchased is produced, and therefore, the user which is a customer can intuitively grasp geographical climate or environment in the field or the plot upon plot selection from the field image.

In order to solve the above-described problems, the present invention relates to a produce sales system for receiving selection of a plot in a field, where produce which is intended to be purchased is produced, via a network to sell the produce produced in the selected plot or to pre-sell the produce scheduled to be produced in the selected plot, the produce sales system including: a plot selection screen provider that causes a client device connected to the produce sales system via the network to display a plot selection screen corresponding to the field; a plot selection receiver that receives, on the plot selection screen, the selection of the plot in the field where the produce which is intended to be purchased is produced from a user of the client device; and a moving image display that causes the client device to display a moving image obtained by, while moving over the plot or the field, performing aerial photographing of a range including the selected plot or field received by the plot selection receiver.

According to the produce sales system, the moving image obtained by, while moving over the plot or the field, performing aerial photographing of the range including the selected plot or field received by the plot selection receiver is displayed on the client device, and therefore, the user which is the customer can intuitively grasp the geographical climate or environment in the field or the plot from the moving image.

### EFFECTS OF INVENTION

As described above, according to the present invention, the customer can intuitively grasp the geographical climate or environment in the field or the plot, where the produce which is intended to be purchased is produced, by use of the sales system that receives the selection of the field or the plot from the customer and sells the produce.

### BRIEF DESCRIPTION OF DRAWINGS

Fig. 1 shows a block diagram of the configuration of a rice sales system according to an embodiment of the present invention;
Fig. 2 shows views of contents of databases in the sales system according to the embodiment of the present invention;
Fig. 3 shows a flowchart of sales processing according to the embodiment of the present invention;
Fig. 4 shows a view of an area selection screen according to the embodiment of the present invention;
Fig. 5 shows a view of a plot selection screen according to the embodiment of the present invention;
Fig. 6 shows views of an example of a produced area environment presenting image according to the embodiment of the present invention;
Fig. 7 shows views of a product selection screen according to the embodiment of the present invention;
Fig. 8 shows a view of a purchase order request screen according to the embodiment of the present invention;
Fig. 9 shows views of another example of the produced area environment presenting image according to the embodiment of the present invention;
Fig. 10 shows a view of another example of the area selection screen according to the embodiment of the present invention; and
Fig. 11 shows a view of another example of the plot selection screen according to the embodiment of the present invention.

### DESCRIPTION OF EMBODIMENTS

Hereinafter, an embodiment of a produce sales system according to the present invention will be described with reference to an exemplary application to a sales system that receives selection of a production field or plot and sells rice.

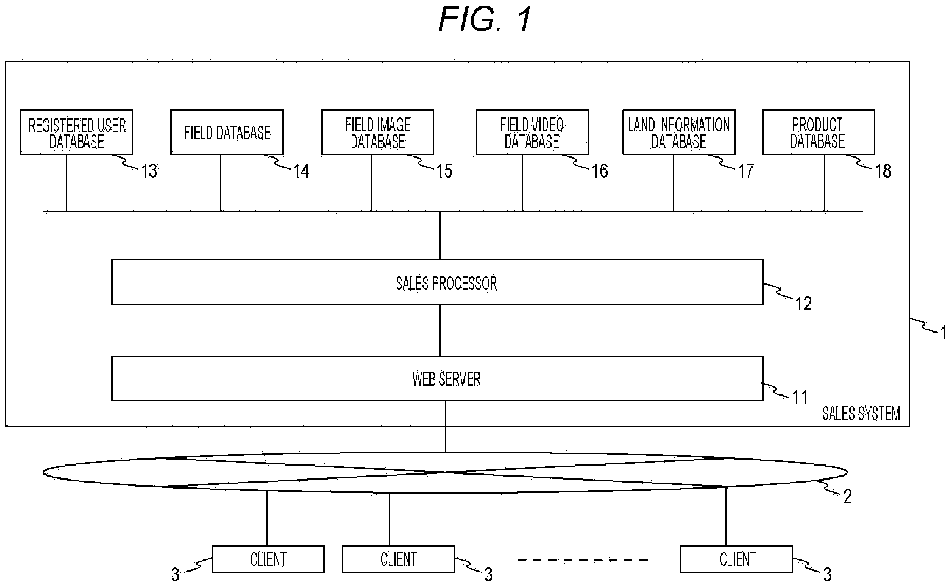

Fig. 1 shows the configuration of the sales system according to the present embodiment.

As shown in the figure, a sales system 1 is connected to the Internet 2. A client 3 which is a device used by a user of the sales system 1, such as a computer, a tablet, or a smartphone including a Web browser, can access to the sales system 1 via the Internet 2.

The sales system 1 is a computer system, and includes a Web server 11, a sales processor 12, a registered user database 13, a field database 14, a field image database 15, a field video database 16, a land information database 17, and a product database 18.

In the registered user database 13, a user name and a password used for authentication of the registered user of the sales system 1, the name, address, and telephone number of the registered user, a purchase history of the registered user, etc. are registered.

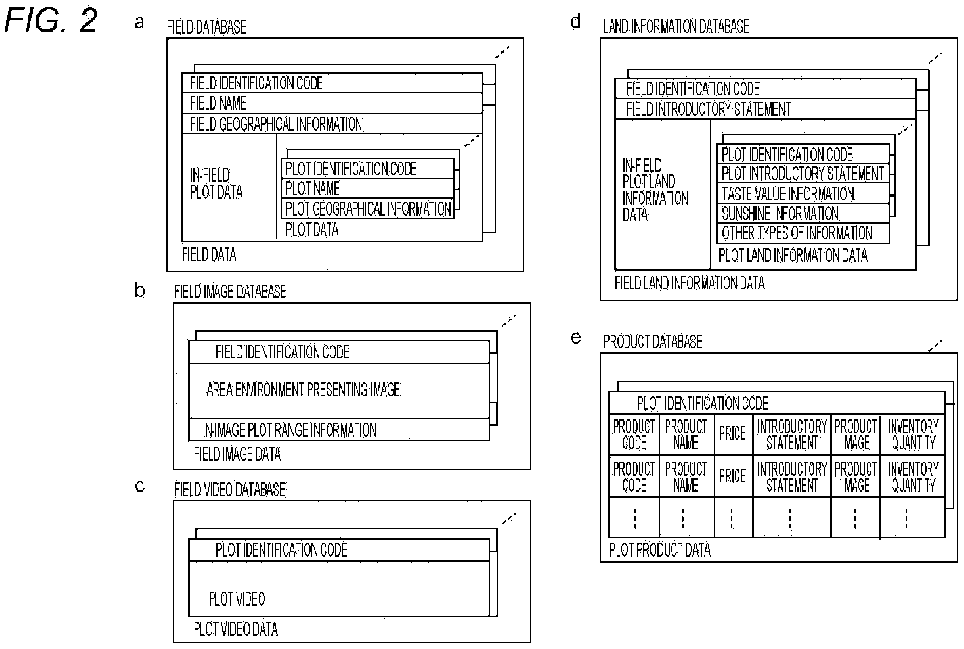

Next, as shown in Fig. 2a, in the field database 14, field data for each field from which rice is sold by the sales system 1 is registered. As each piece of field data, a field identification code which is an identifier of the field, a field name which is the name of the field, field geographical information indicating a geographical range of the field, and in-field plot data are registered.

Note that in the present embodiment, a cultivation plot is used as a plot in the field. However, as the plot in the field, an agricultural plot or other arbitrary plots may be used.

Plot data for each plot in the field is registered as the in-field plot data, and a plot identification code which is an identifier of the plot, a plot name which is the name of the plot, and plot geographical information indicating a geographical range of the plot are registered as each piece of plot data.

Next, as shown in Fig. 2b, in the field image database 15, field image data for each field is registered. As each piece of field image data, a field identification code for the field, an area environment presenting image 5021, and in-image plot range information are registered. The area environment presenting image is an image including an aerial photograph of a geographical range including the field, and the in-image plot range information indicates a range on an area environment presenting image of each plot in the field. This area environment presenting image will be described in detail later.

Next, as shown in Fig. 2c, in the field video database 16, plot video data for each plot in the field is registered. As each piece of plot video data, a plot identification code for the plot and a plot video which is an aerial moving image, which is obtained while a drone is moving, of a range including the plot and the field.

Next, as shown in Fig. 2d, in the land information database 17, field land information data for each field is registered. As each piece of field land information data, a field identification code, a field introductory statement which is a statement for introducing the field, and in-field plot land information data are registered. Plot land information data for each plot in the field is registered as the in-field plot land information data, and a plot identification code, a plot introductory statement which is a statement for introducing the plot, taste value information indicating a taste value of rice produced in the plot, sunshine information indicating a sunshine condition in the plot, and other types of information regarding the plot, such as rice produced in the plot and a soil condition in the plot, are registered as each piece of plot land information data. Note that the in-field plot land information data is not necessarily provided and taste value information indicating a taste value of rice produced in the field, sunshine information indicating a sunshine condition in the field, and other types of information regarding the field, such as rice produced in the field and a soil condition in the field, may be registered for each field together with the field introductory statement.

Next, as shown in Fig. 2e, in the product database 18, plot product data for each plot is registered. As each piece of plot product data, a plot identification code, a product code for each product set for the plot, a product name, a price, a product introductory statement, a product image, a product inventory quantity, and the like are registered. Note that the product set for the plot is the type of sales unit of rice produced in the plot.

Hereinafter, operation of the sales system 1 will be described.

When the user accesses the URL of the sales system 1 on the Web server 11 by use of the Web browser of the client 3, the Web server 11 requests the sales processor 12 to start sales processing in response to the access, and the sales processor 12 having received the request starts the sales processing.

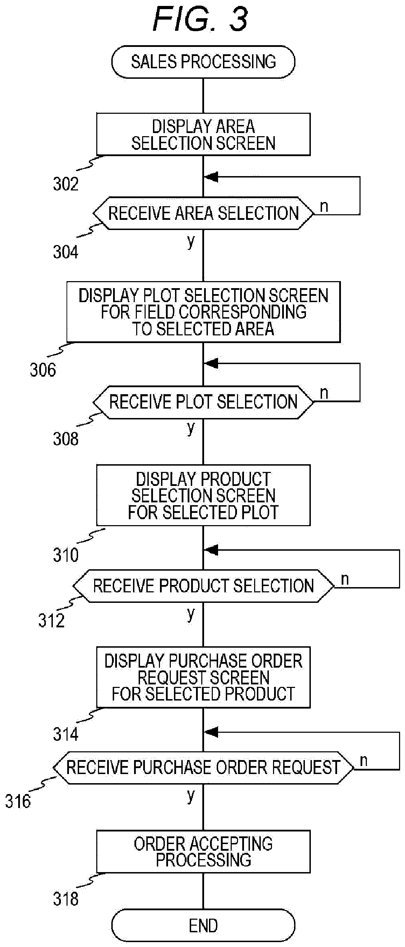

Fig. 3 shows steps of the sales processing performed by the sales processor 12.

As shown in the figure, when starting the sales processing, the sales processor 12 transmits an area selection screen, which has been prepared in advance, via the Web server 11, and causes the Web browser of the client 3 to display the area selection screen (Step 302).

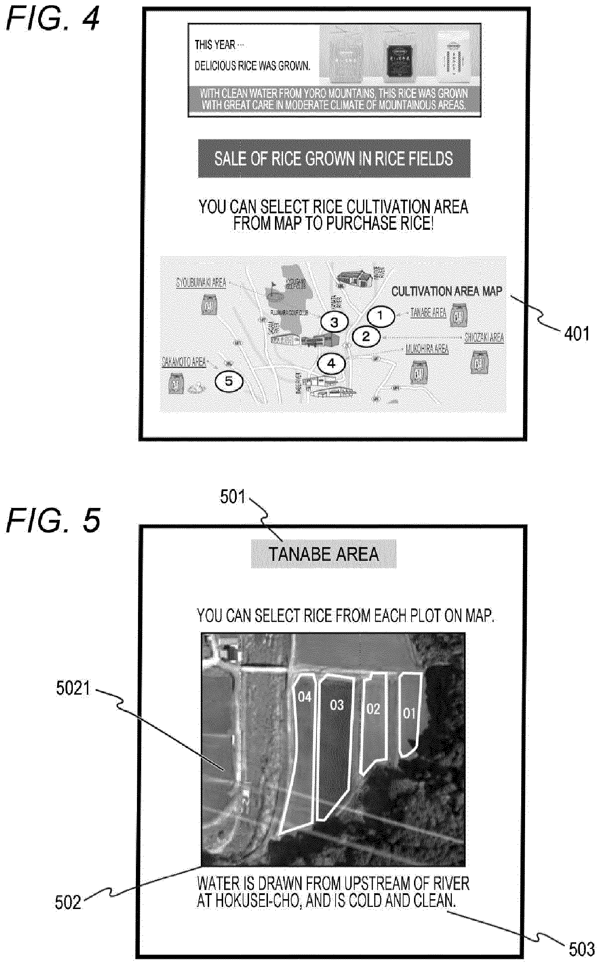

As shown in Fig. 4, the area selection screen includes a guide map 401 on which an approximate position (a number in a circle in the figure) of each area is displayed in a simple manner, a field from which harvested rice is sold being taken as an area.

When the user selects, on the area selection screen displayed on the client 3, the number in the circle to select the area, the Web browser transmits identification information on the selected area to the sales processor 12 via the Web server 11.

Returning to Fig. 3, the sales processor 12 having received the identification information on the area receives the selection of the area indicated by the identification information (Step 304). The sales processor 12 transmits a plot selection screen for a field corresponding to the selected area to the Web browser of the client 3 via the Web server 11, and causes the Web browser of the client 3 to display the plot selection screen (Step 306).

As shown in Fig. 5, the plot selection screen includes a field name 501, a plot selection image 502 for the field, and a field introductory statement 503. The plot selection image 502 for the field is one including, on the area environment presenting image 5021 for the field, a line indicating the boundary of each plot in the field and the name (a number in the figure) of each plot.

The plot selection screen for the field may be generated from the field data, the field image data, or the field land information data on the field corresponding to the area by the sales processor 12 when the selection of the area is received, or the area selection screen for each field may be produced and prepared in advance.

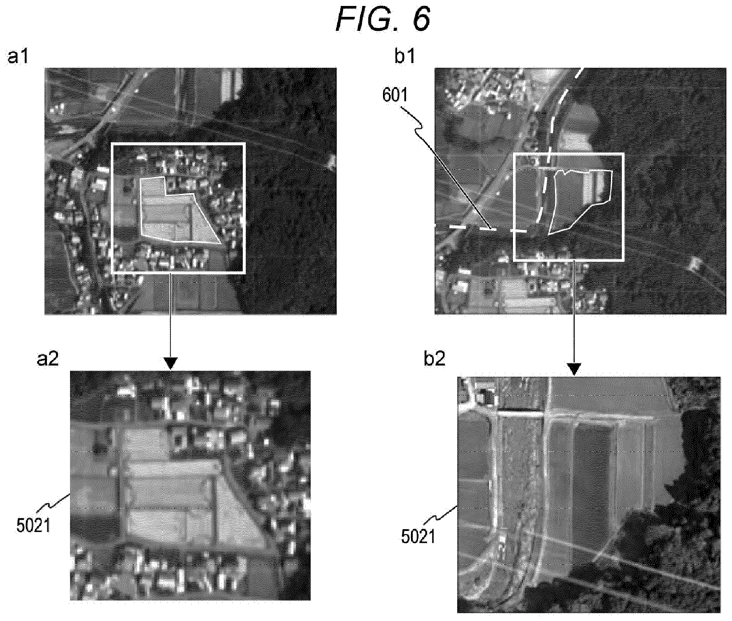

The area environment presenting image 5021 used for such a plot selection image is obtained in such a manner that an image of a range, which includes the field, in a predetermined shape is extracted as a presented image from an aerial photograph including the field on a certain scale as in Figs. 6a1 and 6b1 and the scale of the presented image is changed such that the size of the extracted presented image reaches a predetermined size as in Figs. 6a2 and 6b2.

The range to be extracted as the presented image from the aerial photograph is determined according to the following extraction conditions.

Extraction Condition 1; the range of the smallest plot of the plots in the field on the area environment presenting image 5021 obtained by change of the scale of the presented image is equal to or greater than a predetermined size (e.g., 1% or more, 5% or more, 10% or more, or 20% or more of the area environment presenting image 5021), and the range of the field on the area environment presenting image 5021 obtained by change of the scale of the presented image is equal to or less than a predetermined size (e.g., 90% or less, 80% or less, 60% or less, or 50% or less of the area environment presenting image 5021).

Extraction Condition 2; any of predetermined types of features appears on the area environment presenting image 5021 obtained by change of the scale of the presented image so that such a feature can be recognized.

Extraction Condition 3; within the range satisfying Extraction Conditions 1 and 2, the range of the field on the area environment presenting image 5021 obtained by change of the scale of the presented image is the closest to a predetermined size (e.g., the range of the field on the area environment presenting image 5021 is 50% of the area environment presenting image 5021).

Note that in a case where the presented image cannot be extracted so as to satisfy both Extraction Conditions 1 and 2, only Extraction Condition 2 of Extraction Conditions 1 and 2 is applied. However, only Extraction Condition 1 of Extraction Conditions 1 and 2 may be applied.

The predetermined type of feature in Extraction Condition 2 is the type of feature indicating the characteristic of geographical climate or environment in the field, and includes "mountains," "rivers," "water channels," "lakes," "seas," "forests," "other fields," "residential areas," "dams," "embankments," and part thereof. Note that the "water channels" include "canals," "moats," "waterways," and the like, and the "lakes" are stationary water areas surrounded by lands and not directly connected to seas and include "lakes," "ponds," and "swamps."

The phrase of the feature in Extraction Condition 2 appearing so that the feature can be recognized means differently according to the type of feature, and means that the range of the feature on the area environment presenting image 5021 obtained by change of the scale of the presented image is equal to or greater than a predetermined size (e.g., the range on the area environment presenting image 5021 is equal to or greater than 20% of the area environment presenting image 5021) in the case of "mountains," "seas," and "forests," that the entire feature appears on the area environment presenting image 5021 or the range of the feature on the area environment presenting image 5021 is equal to or greater than a predetermined size (e.g., the range on the area environment presenting image 5021 is equal to or greater than 20% of the area environment presenting image 5021) in the case of "lakes," "other fields," "residential areas," "dams," and "embankments," and that the length of a river or a water channel on the area environment presenting image 5021 is a predetermined length (e.g., equal to or greater than 50% of the vertical length of the area environment presenting image 5021) in the case of "rivers" and "water channels."

In the case of the aerial photograph of Fig. 6a1, there is a residential area near the field. Thus, the range including the field and the residential area on the aerial photograph is extracted as the presented image, and the scale of the presented image is changed such that the residential area is recognizable on the area environment presenting image 5021 and the size of the presented image reaches the predetermined size as shown in Fig. 6a2. In this manner, the area environment presenting image 5021 is generated. In the case of the aerial photograph of Fig. 6b1, there is a river 601 which is "rivers" as indicated by a dotted line near the field. Thus, the range including the field and the river on the aerial photograph is extracted as the presented image, and the scale of the presented image is changed such that the river is recognizable on the area environment presenting image 5021 and the size of the presented image reaches the predetermined size as shown in Fig. 6b2. In this manner, the area environment presenting image 5021 is generated.

Therefore, the scale of the area environment presenting image 5021 is different among fields.

The range to be extracted as the presented image from the aerial photograph may be determined as follows.

That is, for a widest field or a longest field, the range to be extracted as the presented image is determined according to Extraction Condition 1, Extraction Condition 2, and Extraction Condition 3 as described above.

For other fields, the range to be extracted as the presented image is determined according to Extraction Condition 1 and Extraction Condition 2 as described above and Extraction Condition 4 below:
Extraction Condition 4; within the range satisfying Extraction Conditions 1 and 2, the scale of the area environment presenting image 5021 is the closest to the scale of the area environment presenting image 5021 for the widest field.

In this manner, the scale of the area environment presenting image 5021 can be adjusted to each other to some extent among fields.

When the user clicks a position in the plot on the plot selection image 502 to select the plot on the plot selection screen displayed on the client 3 as shown in Fig. 5, the Web browser transmits identification information on the selected plot to the sales processor 12 via the Web server 11.

Returning to Fig. 3, the sales processor 12 having received the identification information on the plot receives the selection of the plot indicated by the identification information (Step 308). The sales processor 12 transmits a product selection screen for the selected plot to the Web browser of the client 3 via the Web server 11, and causes the Web browser of the client 3 to display the product selection screen (Step 310).

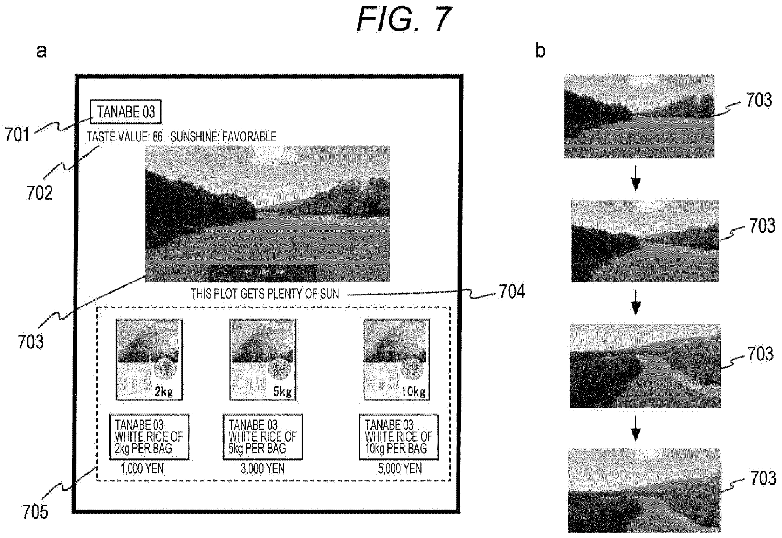

As shown in Fig. 7a, the product selection screen includes an indication 701 of a field name ("TANABE" in the figure) and a plot name ("03" in the figure), plotrelated information 702 such as a taste value of the plot and a sunshine condition in the plot, a plot video 703, a plot introductory statement 704, and a list 705 of product image, name, and price set for the plot. Note that among the products set for the plot, those of which inventory quantities are zero are not included in the list 705 or are displayed with characters "SOLD OUT."

The plot video 703 is a moving image obtained in such a manner that the range including the plot is photographed from above while the drone is moving as described above, and reproduction of the moving image as shown in Fig. 7b is started automatically after the start of display of the product selection screen or by user's reproduction start operation.

Note that upon reception of the selection of the plot, the product selection screen for the plot may be generated in the sales processor 12 from field data or field land data on the field including the plot, plot video data on the plot, or plot product data, or the product selection screen for each plot may be prepared in advance.

Note that on the plot selection screen, a moving image obtained in such a manner that the corresponding field is photographed from above while the drone is moving may be displayed.

When the user clicks a product image or name in the list 705 of the product image, name, and price to select a product of which inventory quantity is not 0 on the product selection screen displayed on the client 3 as shown in Fig. 7, the Web browser transmits identification information on the selected product to the sales processor 12 via the Web server 11.

Returning to Fig. 3, the sales processor 12 having received the identification information on the product receives the selection of the product indicated by the identification information (Step 312). The sales processor 12 transmits a purchase order request screen for the selected product to the Web browser of the client 3 via the Web server 11, and causes the Web browser of the client 3 to display the purchase order request screen (Step 314).

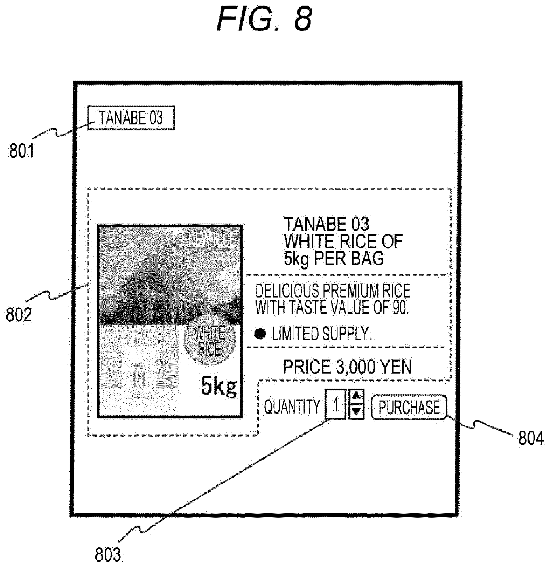

As shown in Fig. 8, the purchase order request screen includes an indication 801 of a field name ("TANABE" in the figure) for the plot for which the selected product is set and a plot name ("03" in the figure), an indication 802 of image, name, and price of the selected product, an indication 803 of a quantity which can be changed by the user, and a purchase button 04.

When the user confirms or specifies the quantity and clicks the purchase button 804 on the purchase order request screen displayed on the client 3 as shown in Fig. 8, the Web browser transmits a purchase order request with the identification information on the selected product and the quantity to the sales processor 12 via the Web server 11.

Returning to FIG. 3, the sales processor 12 having received the purchase order request receives the purchase order request for the quantity of products indicated by the identification information (Step 316), and performs order accepting processing for the purchase order request (Step 318).

In the order accepting processing, a predetermined order accepting screen is displayed on the Web browser of the client 3 to receive a payment method, a product delivery address, and the like and to confirm a purchase intention. When such reception and confirmation are completed, an order with the contents of the purchase order request is accepted, and the inventory quantity of ordered products in the plot product data is decreased by the accepted quantity.

Then, when the order accepting processing is completed, the sales processing ends.

Note that the sales processing ends when the user of the client 3 cancels the processing. When the user of the client 3 returns the processing, the processing returns to the processing on the screen displayed immediately before the currently-displayed screen.

The embodiment of the present invention has been described above.

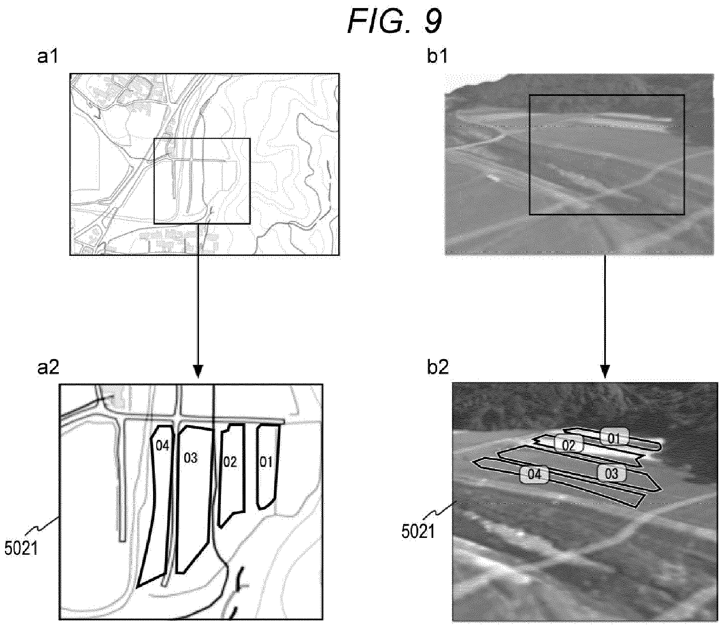

In the above-described embodiment, the area environment presenting image 5021 used for the plot selection image 501 on the plot selection screen shown in Fig. 5 is extracted from the aerial photograph. However, the area environment presenting image 5021 may be obtained in such a manner that a map of a range, which includes the field, in a predetermined shape is extracted as a presented map from a map such as a topographical map including the field as shown in Fig. 9a1 and the scale of the extracted presented map is changed such that the size of the extracted presented map reaches a certain size as shown in Fig. 9a2. The range to be extracted as the presented map follows the same extraction conditions as those for the range to be extracted as the presented image from the aerial photograph.

Alternatively, the area environment presenting image 5021 may be obtained in such a manner that a three-dimensional map of a range, which includes the field, in a predetermined shape is extracted as a presented three-dimensional map from a three-dimensional map including the field as shown in Fig. 9b1 and the scale of the extracted presented three-dimensional map is changed such that the size thereof reaches a certain size as shown in Fig. 9b2. The range to be extracted as the presented three-dimensional map follows the same extraction conditions as those for the range to be extracted as the presented image from the aerial photograph. In this case, the user may three-dimensionally operate the orientation (the view point) of the presented three-dimensional map on the plot selection image 501 displayed on the plot selection screen.

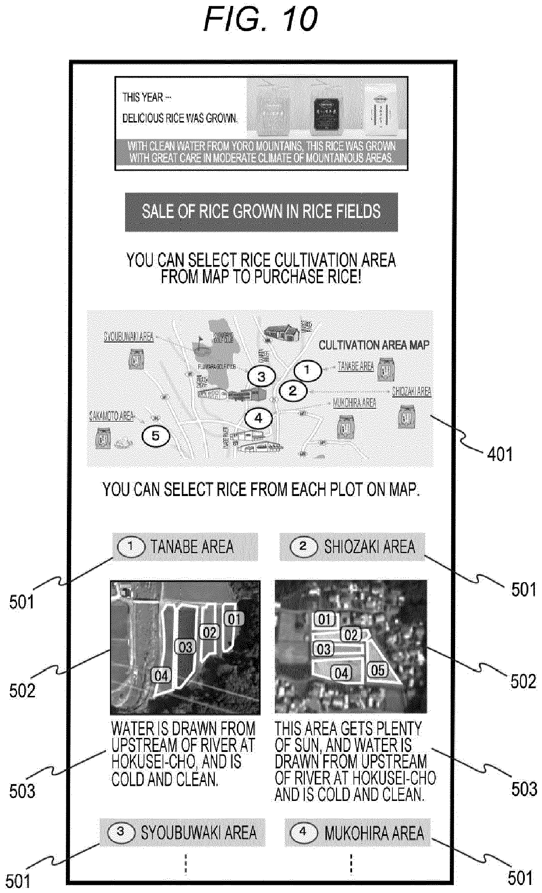

In the above-described embodiment, the area selection screen of Fig. 4 and the plot selection screen for each field in Fig. 5 are separately provided. However, the plot selection screen for each field may be integrated with the area selection screen to form one screen, as shown in Fig. 10. In this case, when the selection of the plot has been received on the area section screen, the Web browser of the client 3 changes the display range of the area selection screen such that the plot selection screen for the field corresponding to the selected area is displayed.

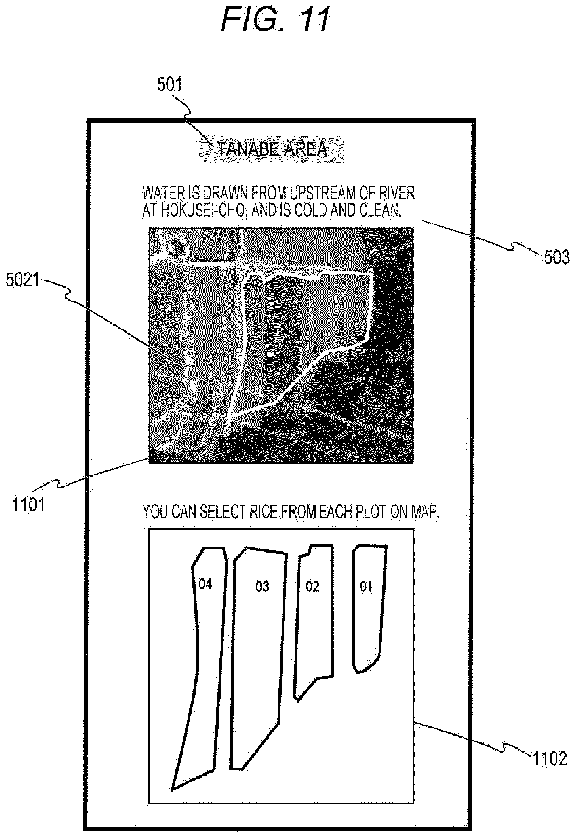

In the above-described embodiment, the selection of the plot is received on the plot selection image 502 on the plot selection screen for each field as shown in Fig. 5. However, as shown in Fig. 11, a field image 1101 with a line indicating the boundary of the field on the area environment presenting image 5021 for the field and a plot map 1102 indicating the divided plots in the field may be, instead of the plot selection image 502, displayed on the plot selection screen, and the selection of the plot may be received according to an operation of selecting the plot on the plot map 1102.

The sales system 1 according to the present embodiment can be applied as a system that sells arbitrary produce other than rice from each plot.

In addition, the sales system 1 according to the present embodiment can also be applied as a system that receives a pre-order instead of the sales order to pre-sell produce scheduled to be produced in the field from each plot. Further, in the sales system 1 according to the present embodiment, both the sales order and the pre-order may be received.

As described above, according to the present embodiment, since the plot selection image 502 including the aerial photograph, the two-dimensional map, or the three-dimensional map of the range including the field and the predetermined type of feature indicating the geographical climate or environment in the field or the plot, such as "mountains," "rivers," "water channels," "lakes," "seas," "forests," "other fields," "residential areas," "dams," and "embankments," and the plot video 703 which is the moving image obtained in such a manner that the range including the plot or the field is photographed from above while the drone is moving are displayed, the user which is a customer can intuitively grasp the geographical climate or environment in the field or the plot.

### LIST OF REFERENCE SIGNS

- 1: Sales System
- 2: Internet
- 3: Client
- 11: Web Server
- 12: Sales Processor
- 13: Registered User Database
- 14: Field Database
- 15: Field Image Database
- 16: Field Video Database
- 17: Land Information Database
- 18: Product Database

## Claims

1. A produce sales system for receiving selection of a plot in a field, where produce which is intended to be purchased is produced, via a network to sell the produce produced in the selected plot or to pre-sell the produce scheduled to be produced in the selected plot, comprising:
a plot selection screen provider that causes a client device connected to the produce sales system via the network to display a plot selection screen corresponding to the field; and
a plot selection receiver that receives, on the plot selection screen, the selection of the plot in the field where the produce which is intended to be purchased is produced from a user of the client device,
wherein the plot selection screen includes a field image which is an image including an environment presenting image which is any of an aerial photograph, a two-dimensional map, and a three-dimensional map indicating conditions of the corresponding field and at least part of a predetermined type of feature outside the field, and
the predetermined type is a type of feature indicating a characteristic of geographical climate or environment.

2. The produce sales system according to claim 1, further comprising:
a field selection screen provider that causes the client device to display a field selection screen including a field guide map that multiple field positions are displayed on a map; and
a field selection receiver that receives, on the field guide map on the field selection screen, selection of the field from the user of the client device,
wherein the plot selection screen provider causes the client device to display the plot selection screen corresponding to the selected field received by the field selection receiver.

3. The produce sales system according to claim 2, wherein
the field selection screen and the plot selection screen including multiple plot selection screens each corresponding to multiple fields form different portions of one Web page.

4. The produce sales system according to claim 2 or 3, wherein
the environment presenting images included in the field images on the plot selection screens each corresponding to the multiple fields are images having an identical size and set on such scales that the conditions of the corresponding fields and the predetermined type of feature are displayed on the environment presenting images, the scales being not unified among the plot selection screens.

5. The produce sales system according to claim 1, 2, 3, or 4, wherein
the field image includes a figure indicating the plot in the field on the environment presenting image, and
the plot selection receiver receives the selection of the plot on the field image.

6. The produce sales system according to claim 1, 2, 3, 4, or 5, wherein
the environment presenting image is produced in such a manner that a range satisfying a predetermined condition is extracted as a presented portion from any of the aerial photograph, the two-dimensional map, and the three-dimensional map indicating the feature in the range including the field and a scale of the presented portion is changed such that a size of the extracted presented portion reaches a predetermined size, and
the predetermined condition for the range is that the range includes the field and the predetermined type of feature and a percentage of a size of the field included in the presented portion with respect to the size of the presented portion is a predetermined percentage or greater.

7. The produce sales system according to claim 1, 2, 3, 4, 5, or 6, wherein
the predetermined type includes any one of a "mountain," a "river," a "water channel," a "lake," a "sea," a "forest," "other fields," a "residential area," a "dam," or an "embankment."

8. A produce sales system for receiving selection of a plot in a field, where produce which is intended to be purchased is produced, via a network to sell the produce produced in the selected plot or to pre-sell the produce scheduled to be produced in the selected plot, comprising:
a plot selection screen provider that causes a client device connected to the produce sales system via the network to display a plot selection screen corresponding to the field;
a plot selection receiver that receives, on the plot selection screen, the selection of the plot in the field where the produce which is intended to be purchased is produced from a user of the client device; and
a moving image display that causes the client device to display a moving image obtained by, while moving over the plot or the field, performing aerial photographing of a range including the selected plot or field received by the plot selection receiver.

9. A plot selection reception method for receiving selection of a plot in a field, where produce which is intended to be purchased is produced, by use of a produce sales system that receives the selection of the plot in the field via a network to sell the produce produced in the selected plot or to pre-sell the produce scheduled to be produced in the selected plot, comprising:
a plot selection screen providing step of the produce sales system causing a client device connected to the produce sales system via the network to display a plot selection screen corresponding to the field; and
a plot selection receiving step of the produce sales system receiving, on the plot selection screen, the selection of the plot in the field where the produce which is intended to be purchased is produced from a user of the client device,
wherein the plot selection screen includes a field image which is an image including an environment presenting image which is any of an aerial photograph, a two-dimensional map, and a three-dimensional map indicating conditions of the corresponding field and at least part of a predetermined type of feature outside the field, and
the predetermined type is a type of feature indicating a characteristic of geographical climate or environment.

10. A plot selection reception method for receiving selection of a plot in a field, where produce which is intended to be purchased is produced, by use of a produce sales system that receives the selection of the plot in the field via a network to sell the produce produced in the selected plot or to pre-sell the produce scheduled to be produced in the selected plot, comprising:
a plot selection screen providing step of the produce sales system causing a client device connected to the produce sales system via the network to display a plot selection screen corresponding to the field;
a plot selection receiving step of the produce sales system receiving, on the plot selection screen, the selection of the plot in the field where the produce which is intended to be purchased is produced from a user of the client device; and
a moving image displaying step of the produce sales system causing the client device to display a moving image obtained by, while moving over the plot or the field, performing aerial photographing of a range including the selected plot or field received by the plot selection receiver.
